# EUROPEAN PATENT SPECIFICATION

(11) **EP 3 612 801 B1**
(45) Date of publication and mention of the grant of the patent: **30.12.2020**
(21) Application number: 18722344.1
(22) Date of filing: 17.04.2018
(51) Int. Cl.: G01D 5/14, G01D 5/347, G01B 21/24, G01B 21/26, G01L 3/10, G01L 3/12, G01B 7/31, G01B 7/312

(54) **METHODS AND SYSTEMS FOR MEASURING PARAMETERS OF ROTATING SHAFTS AND COUPLINGS**
VERFAHREN UND SYSTEME ZUR MESSUNG VON PARAMETERN VON DREHWELLEN UND KUPPLUNGEN
PROCÉDÉS ET SYSTÈMES DE MESURE DE PARAMÈTRES D'ARBRES ROTATIFS ET DE RACCORDS

(30) Priority: 17.04.2017 US 201762486170 P
(43) Date of publication of application: 26.02.2020
(73) Proprietor: Lord Corporation, Cary, North Carolina 27511 (US)
(72) Inventor: KAKALEY, Daniel, Raleigh, North Carolina 27603 (US); ALTIERI, Russell, Holly Springs, North Carolina 27540 (US); JOLLY, Mark, Raleigh, North Carolina 27609 (US); ZACCARDO, Victor, Cary, North Carolina 27518 (US)
(74) Representative: Wynne-Jones IP Limited
(86) International application number: PCT/US2018/027933
(87) International publication number: WO 2018/195053

(56) References cited:
- EP-A2- 1 193 484
- EP-A2- 1 300 662
- DE-T2- 69 420 781
- GB-A- 2 202 949
- US-A- 5 514 952

## Description

### TECHNICAL FIELD

The subject matter described in this specification relates to methods and systems for measuring displacement parameters of rotating shafts and couplings.

### BACKGROUND

Many types of systems include a rotatable shaft. For example, electric motors, internal combustion engines, and transmissions of vehicles and manufacturing systems typically include one or more drive shafts. Shafts can be coupled together with rotational couplings, and some rotational couplings are flexible. For example, bellows couplings allow for twisting and misalignment between two shafts. Conventional measurement systems for monitoring rotational couplings measure twist, torque, and misalignment at rotational couplings using, e.g., sensors angularly spaced around the coupling. These conventional measurement systems, however, may have excess noise on the torque signal, and various conventional measurement systems lack an economical system for measuring both twist, torque, and misalignment and other parameters such as axial displacement. There is a need for methods and systems for measuring twist and axial displacement of rotating shafts and couplings.

DE69420781T2 discloses an alignment detection apparatus for a shaft rotatable about an axis includes alignment indicating means rotatable by the shaft and comprising a plurality of detectable elements or teeth. Sensors are provided for detecting the elements and alignment of the shaft as a function of the element, and the elements comprise at least one reference element and at least one alignment dependent element.

US5,514,952A discloses an axial alignment detection apparatus for a shaft rotatable about an axis includes alignment indicating means rotatable by the shaft and comprising a plurality of detectable elements; and detector means for detecting the elements and alignment of the shaft as a function of the elements; the elements comprising at least one reference element and at least one alignment dependent element, wherein the reference and alignment elements have a detectable alignment dependent relationship to each other.

EP1193484A2 discloses a rotational angle detecting device comprises a rotating member, a target which is provided on the rotating member and whose portion to be detected is continuously changed as the rotating member rotates, and one or more detecting means for detecting a portion close to the target and detecting a displacement angle of the rotating member from the detecting means in a rotational direction based on the portion detected by the detecting means.

EP1300662A2 discloses a target plate fitted onto a first shaft and configured by a gear with a plurality of teeth arranged on an outer circumference as targets. Facing the outer circumference of the target plate, a magnetoresistive (MR) sensor is fixed and is provided with MR elements which are arranged in a circumferential direction in accordance with an arrangement interval of the targets. A rotational angle of the target plate is calculated based on an output obtained between both MR elements in accordance with the deviation in the circumferential direction of the targets with the rotation of the target plate.

GB2202949A discloses a shaft monitoring system for sensing axial movement of a shaft, especially in a gas turbine engine. The system comprises a toothed wheel attached to and rotatable with the shaft, and a pair of axially spaced inductive sensors disposed radially of the toothed wheel for sensing the passage of the teeth as the shaft rotates.

### SUMMARY

The present invention provides a measurement system as in claim 1 and a method performed by a controller of a measurement system as in claim 12.

### BRIEF DESCRIPTION OF THE DRAWINGS

FIGS. 1A-F illustrate an example mechanical environment for measurement systems that measure parameters of shafts and couplings.
FIG. 2 is block diagram of a controller configured to receive sensor signals from the sensors.
FIG. 3 shows a graph of an example waveform from one of the sensors.
FIG. 4 shows an example target wheel with slanted targets.
FIGS. 5A and 5B show an example axial target pattern for a target wheel having slanted targets.
FIGS. 6A and 6B show a different example axial target pattern for a target wheel having slanted targets.
FIG. 7 illustrates various types of shaft or coupling alignments that can be determined using the systems and methods described in this specification.
FIGS. 8A and 8B illustrate variables with reference to an example target plane.
FIG. 8C shows example sensor waveforms illustrating a phase difference between two sensors.
FIGS. 8D - 8H show the use of target timing measurements to determine a twist angle.
FIGS. 9A-9D illustrate an example shaft having two target wheels and on the shaft.

### DETAILED DESCRIPTION

This specification describes systems and methods for measuring displacement parameters of rotating shafts and couplings. The parameters can, for example and without limitation, include twist, axial displacement, and radial displacement of rotating shafts and couplings in a radial plane of the shafts and couplings. The measurements can be used to determine torque based on the twist measurement, parallel and angular misalignment, axial strain and displacement, run-out, whirl, and torsional dynamics. With some rotational couplings, it is useful, e.g., for safety purposes and for maintenance scheduling, to ensure that high speed machinery is not undergoing significant misalignments and/or axial displacements while rotating at high speeds. These correspond to the axial and bending strains of the coupling, but have the added benefit of not needing a rotating frame electronics or gauges.

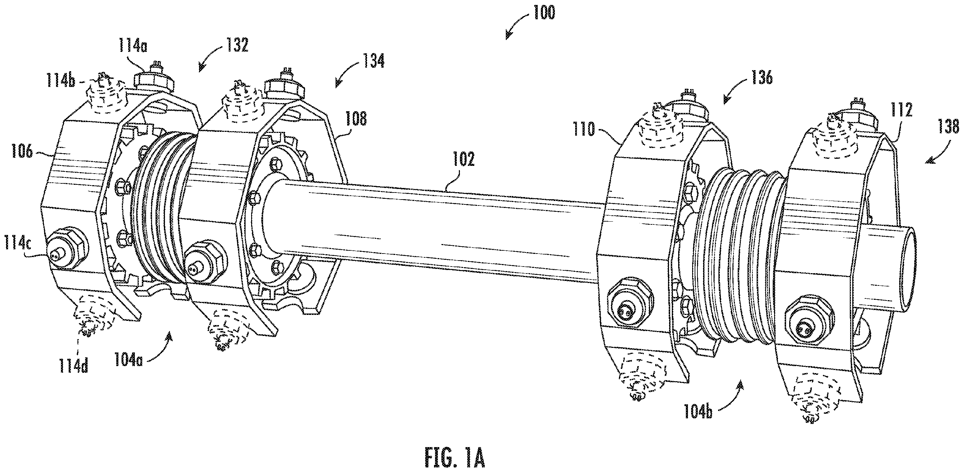

FIGS. 1A-F illustrate an example mechanical environment **100** for measurement systems that measure parameters of shafts and couplings. The mechanical environment **100** includes a shaft **102** and two rotational couplings **104a-b** to different shafts. The rotational couplings **104a-b** are generally flexible couplings that allow some twisting and misalignment between shafts. For example, the rotational couplings **104a-b** are bellows couplings in some embodiments. In other embodiments (not shown), the two rotational couplings **104a-b** may be a rigid coupling, a semi-rigid coupling, or a flexible coupling.

The mechanical environment **100** of FIGS. 1A-F includes two rotational couplings **104a-b;** however, in general, a measurement system as described can be used in mechanical environments with one coupling or in mechanical environments with more than two couplings. In some examples, a measurement system is used with a shaft segment, i.e., where there is no coupling.

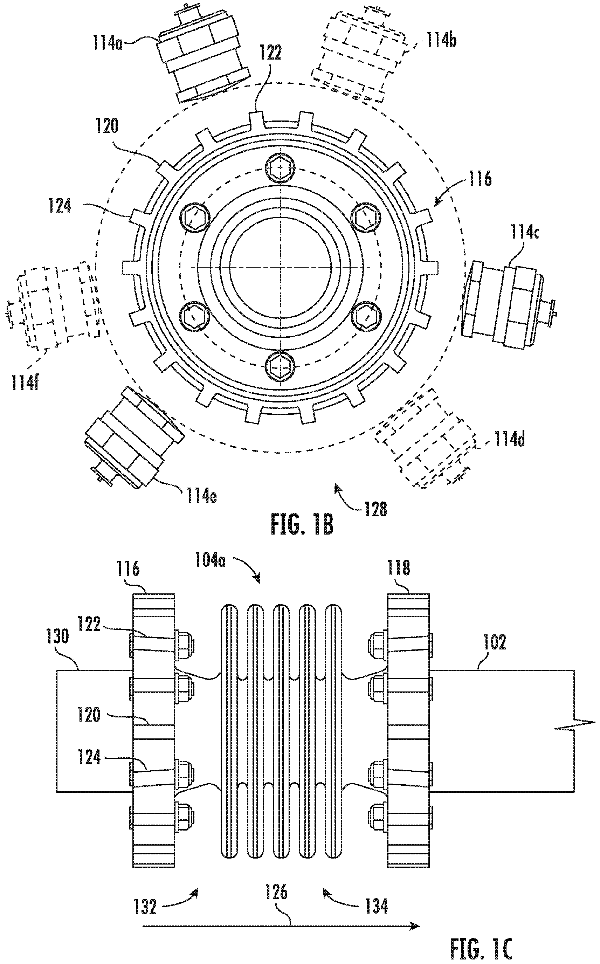

FIG. 1A shows a perspective view of the mechanical environment **100.** As illustrated, the mechanical environment **100** includes at least two planes of sensors and at least three sensors in each plane. As illustrated in FIG. 1A, a first two planes of sensors include sensor arrays **106, 108,** and a second two planes of sensors includes sensor arrays **110,112.** Additional sensor arrays may be added as necessary. All sensor arrays **106, 108, 110, 112** are positioned proximate the shaft **102** without touching shaft **102,** creating a space such as an air gap, which is illustrated in FIG. 1B, and generally do not rotate with the shaft. The first sensor array **106** is illustrated as being disposed at a first end **132** of the first rotational coupling **104a,** and the second sensor array **108** is illustrated as being disposed at a second end **134,** opposite the first end **132,** of the first rotational coupling **104a.** Similarly, the third sensor array **110** is illustrated as being disposed at a first end **136** of the second rotational coupling **104b,** and the fourth sensor array **112** is illustrated as being disposed at a second end **138,** opposite the first end **136,** of the second rotational coupling **104b.** The sensor array may be affixed to machine structure such as a housing or shroud that encloses the shaft **102,** or it may be affixed to a cradle (not shown).

Each sensor array includes sensors mounted radially around the shaft **102.** For purposes of illustration, the first sensor array **106** will be described in further detail; the other sensor arrays **108, 110, 112** are typically configured identically or similarly to the first sensor array **106.** Any additional sensor arrays will be similarly configured. The first sensor array **106** includes at least three sensors **114a, 114c, 114e** in a first plane mounted radially around the shaft **102.** For example, the first sensor array **106** can include three sensors **114a, 114c,** and **114e** mounted uniformly at a constant circumferential spacing. For additional redundancy, the first sensor array **106** can also include three additional sensors **114b, 114d,** and **114f** mounted uniformly at the constant circumferential spacing and offset from the other three sensors **114a, 114c,** and **114e.** As illustrated in the FIGS., sensors **114b, 114d,** and **114f** are shown as dashed lines to illustrate these sensors being redundant. In general, the first sensor array **106** can include at least three sensors in each plane, and include any number of additional sensors to improve reliability, accuracy, safety-critical redundancy, etc. Furthermore, the sensors can be mounted in any circumferential pattern including non-uniform circumferential spacing.

FIG. 1B shows a top view of the sensors **114a-f,** and FIG. 1C shows a side view of the first rotational coupling **104a** including a first target wheel **116** at the first end **132** of the rotational coupling **104a** and a second target wheel at the second end **134** of the rotational coupling. FIG. 1B illustrates that the sensors **114a-f** are mounted radially in a radial plane **128** of the shaft **102,** and FIG. 1C illustrates that the shaft **102** extends in a longitudinal direction **126** and that the first rotational coupling **104a** couples the shaft **102** to a different shaft **130.**

Referring to FIG. 1C, the target wheels **116, 118** each include sensor targets such as the teeth illustrated on target wheels **116, 118,** mounted radially around the shaft **102.** For purposes of illustration, the first target wheel **116** will be described in further detail. Target wheel **118** is typically configured identically or similarly to the first sensor array. The second rotational coupling **104b** typically includes target wheels configured identically or similarly to the first rotational coupling **104a.**

The first target wheel **116** is configured to rotate with the shaft **130** so that the first target wheel **116** is rigidly fixed to the shaft **130.** For example, the first target wheel **116** is rigidly integrated with the first rotational coupling **104a** in some embodiments. In this example, the first target wheel **116** is a toothed wheel having teeth radially mounted around the target wheel. In the illustrated example, the first target wheel **116** includes targets that are parallel to the longitudinal direction **126,** e.g., target **120,** and targets that are slanted in the longitudinal direction **126,** e.g., targets **122, 124.** Alternatively, the targets may be slots, or other features that are detectable by the sensor arrays.

S of the slanted targets, e.g., target **122,** are slanted in opposite orientations, in the longitudinal direction **126,** to some of the other slanted targets, e.g., target **124.** In general, the targets are disposed radially around the first target wheel **116** in an alternating fashion. In the example illustrated in FIG. 1C, the first sensor wheel **116** includes, in a radial direction around the shaft **130,** two parallel targets followed by a slanted target slanted in a first orientation, then two parallel targets followed by a slanted target slanted in a second orientation opposite the first orientation, and repeating thereafter.

Referring to FIG. 1B, the sensors **114a-f** are mounted radially around the first target wheel **116** and configured to detect the sensor targets as the target wheel **116** rotates with the shaft **130.** In one example embodiment, the sensors **114a-f** can be used for measuring timing of target passage to infer shaft twist or axial and radial displacement.

The sensor targets are, for example, conductive targets, optical targets, ferrous targets, or combinations of these on the first target wheel **116** in some embodiments. Each of the sensors **114a-f** at least comprises a passive inductive sensor such as a variable reluctance (VR) sensor, a non-contact active inductive sensor such as a differential variable reluctance transducer (DVRT), an optical sensor, a microwave sensor, a capacitive proximity sensor, a Hall sensor, or any other appropriate type of sensor. In some embodiments, the sensor targets are uniformly spaced circumferentially around the first target wheel **116.** In some other embodiments, the sensor targets are placed with non-uniform spacing around the first target wheel **116.**

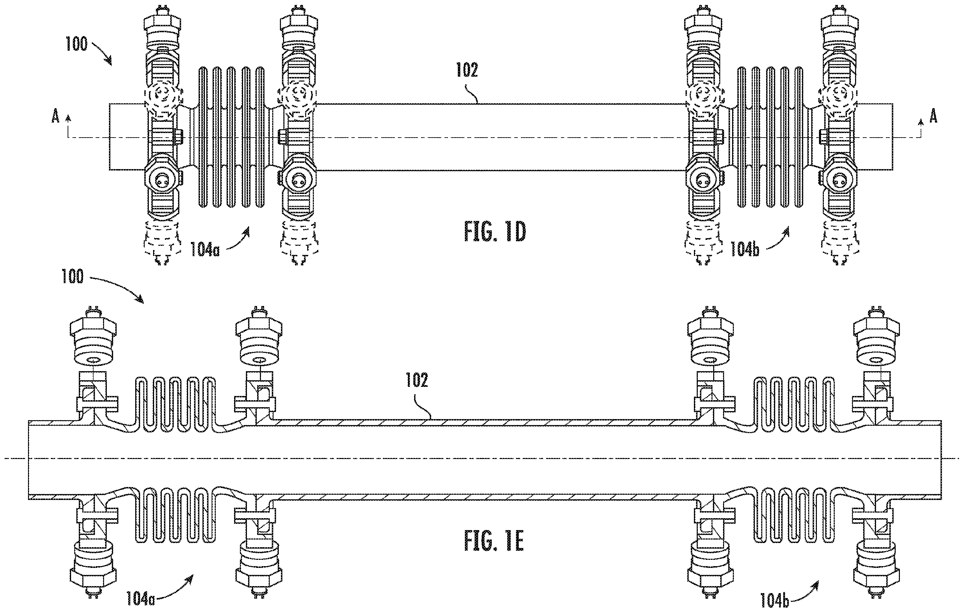

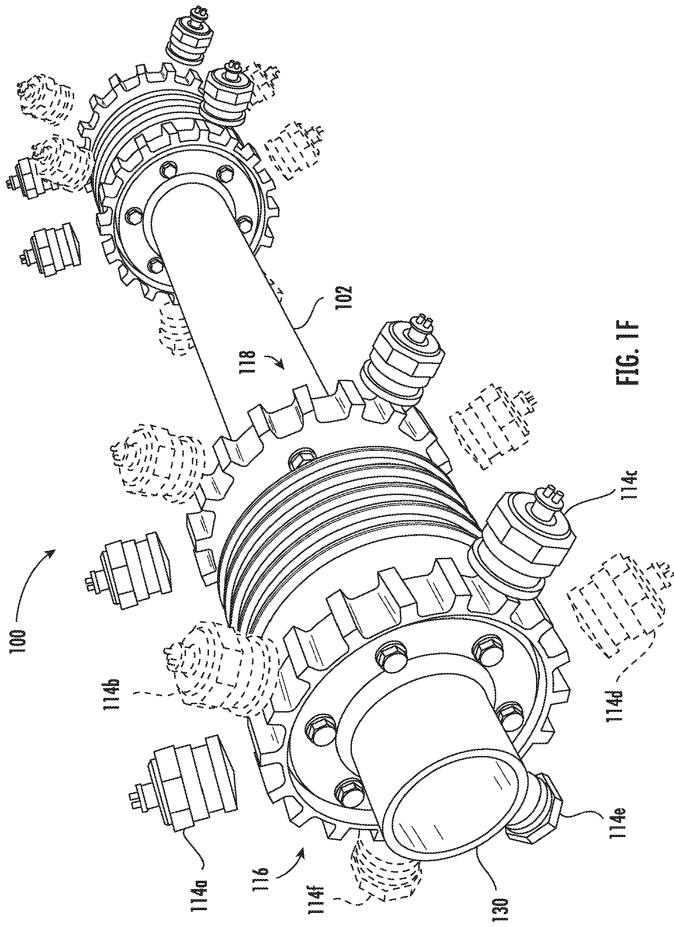

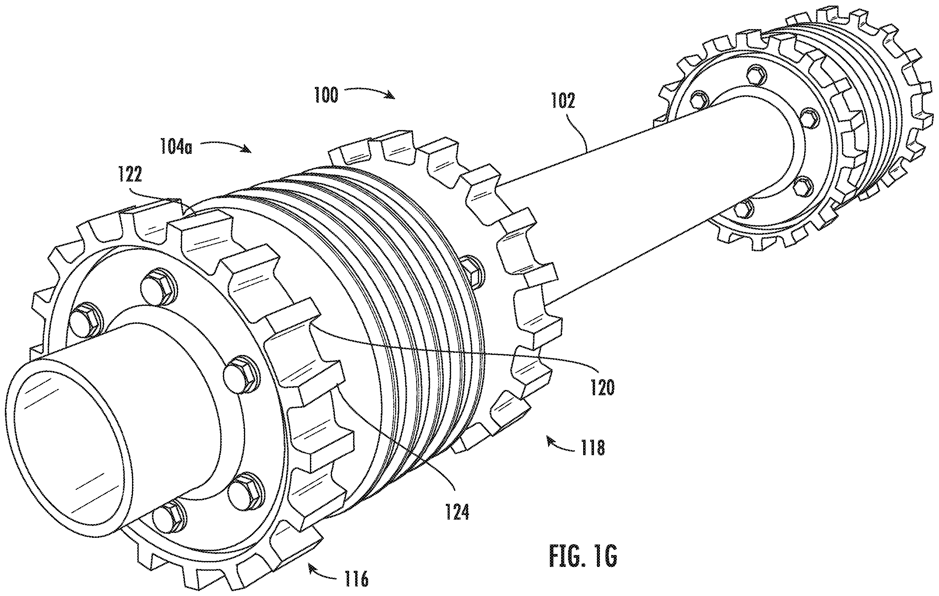

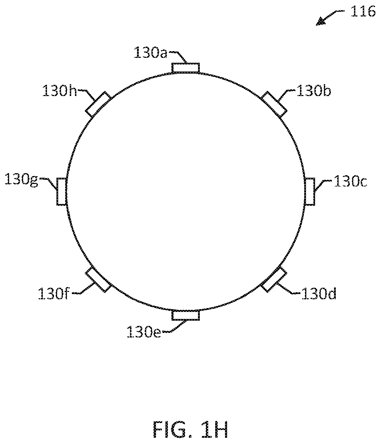

FIG. ID is a side view of the mechanical environment **100** including the shaft **102** and the rotational couplings **104a-b.** FIG. IE is a cross-sectional view of the mechanical environment **100** including the shaft **102** and the rotational couplings **104a-b.** FIG. 1F is a partially exploded perspective view of the mechanical environment **100** illustrating the position of the sensors **114a-f** around the first target wheel **116.** FIG. 1G is a perspective view of the mechanical environment **100** illustrating an example parallel target **120** and example slanted targets **122, 124.** The sensor arrays **106, 108, 110, 112** are not shown in FIGS. 1D-F for purposes of simplifying the illustration. FIG. 1H is a top view of an alternative embodiment of the first target wheel **116.** The target wheel **116** has sensor targets **130a-h** mounted on the target wheel **116,** instead of or in addition to the target wheel **116** being a toothed target wheel.

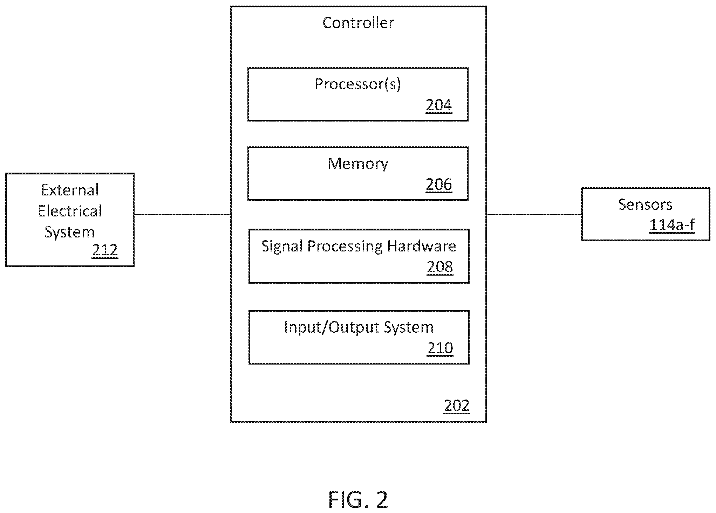

FIG. 2 is block diagram of a controller **202** configured to receive sensor signals, e.g., as electrical signals, from the sensors **114a-f.** The controller **202** is configured, e.g., by virtue of appropriate signal processing that is partially based upon the equations disclosed herein and as further known to those having skill in the art of electronic control systems, in order to determine, based on the sensor signals, an axial displacement measure of the shaft **102** in the longitudinal direction **126** and a radial displacement measurement of the shaft **102.**

In the illustrated embodiments, the controller **202** includes one or more processors **204** and memory **206** storing executable instructions for the processors **204.** The controller **202** includes an input/output system **210** configured for electronically receiving the sensor signals from the sensors **114a-f.** The electronic communication may be accomplished using wired or wireless communication. In some embodiments, the input/output system **210** is configured, by virtue of including appropriate communications circuits, for transmitting information to an external power and/or signal interface **212,** referred to hereinafter as signal interface **212,** for example which is the power and/or control system for a motor or engine driving the shaft **102.** For example, the controller **202** can be configured for transmitting safety critical feedback to an external electrical system such as control feedback or structural health indicators.

The controller **202** includes signal processing hardware **208** for receiving the sensor signals from the sensors **114a-f** and, as disclosed herein, determining appropriate rotational parameters based on the sensor signals. The signal processing hardware **208** can include any appropriate circuits for capturing waveforms and waveform parameters from sensor signals. In some embodiments, the signal processing hardware **208** includes circuits for detecting a rising or falling edge or a zero-crossing at any time, including times that are not quantized by a digital clock. In some embodiments, the signal processing hardware **208** includes sample-and-hold devices that are triggered by rising or falling edges or zero-crossings, which are implemented by trigger circuits and counter circuits.

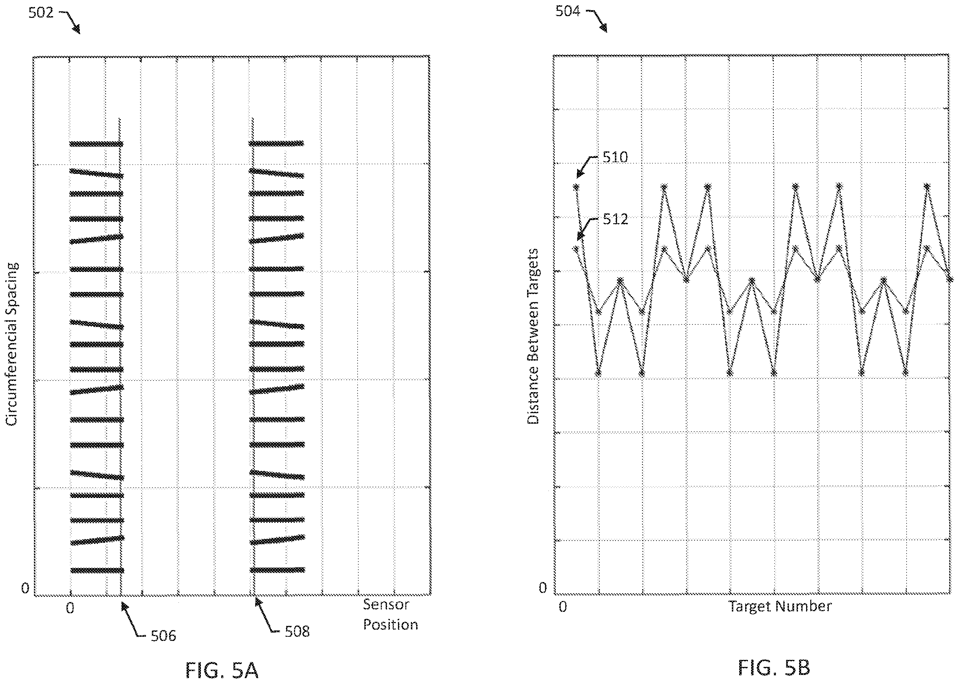

In some embodiments, the controller **202** is configured to determine the axial displacement measurement of the shaft **102** based on a relative timing difference between detecting slanted targets **122, 124** and detecting parallel targets **120,** which is described further below with reference to FIGS. 5-6. In some embodiments, the controller **202** is configured to determine a twist measurement using a mean timing difference between detecting the sensor targets across two target wheels.

In some embodiments, the controller **202** is programmed to determine one or more or all of control feedback parameters or structural health indicators to include, but not limited to: axial strain, axial displacement, parallel misalignment, angular misalignment, run-out, and twist.

In some embodiments, the controller **202** is configured to transmit safety critical feedback to a signal interface **212** based on the one or more structural health indicators or real-time control parameters. For example, the controller **202** in some embodiments is programmed to transmit an alert message to the signal interface **212** if one of the structural health indicators falls outside of a predetermined range for the structural health indicator. The signal interface **212** can respond to the safety critical information with any appropriate actions. For example, suppose that the signal interface **212** is an electronic control unit for a motor rotating the shaft **102.** In some embodiments, the electronic control unit decreases power to the motor or engine in response to the safety critical information.

Typically, the controller **202** measures timing information using the sensor signals by determining timing between detection of targets on the target wheels **116, 118.** In some embodiments, the controller **202** receives sensor signals from the first and second sensor arrays **106, 108** at opposite ends of a rotational coupling and determines, using first sensor signals from the first sensor array **106** and second sensor signals from the second sensor array **108,** various displacements of the first and second target wheels **116, 118.**

The controller **202** can be implemented in software in combination with hardware and/or firmware. For example, the controller **202** can be implemented in software executed by a processor. In some embodiments, the controller **202** is implemented using a computer readable medium having stored thereon computer executable instructions that when executed by the processor of a computer control the computer to perform steps. Examples of computer readable media suitable for implementing the controller **202** include non-transitory devices, such as disk memory devices, chip memory devices, programmable logic devices, and application specific integrated circuits. In addition, a computer readable medium for the controller **202** may be located on a single device or computing platform or may be distributed across multiple devices or computing platforms. Design, configuration, and operation of controllers are known to those skilled in the art, to include the necessary software and firmware programming to operate the controller. Those having skill in the art know that the primary purpose of controller is to (a) condition the sensor inputs and convert these inputs into target timing values, (b) condition the power input, (c) implement the math and signal processing provided in the patent and (d) communicate with the signal interface. In this case, controller **202** is such that one skilled in the art is able to create it based upon existing knowledge.

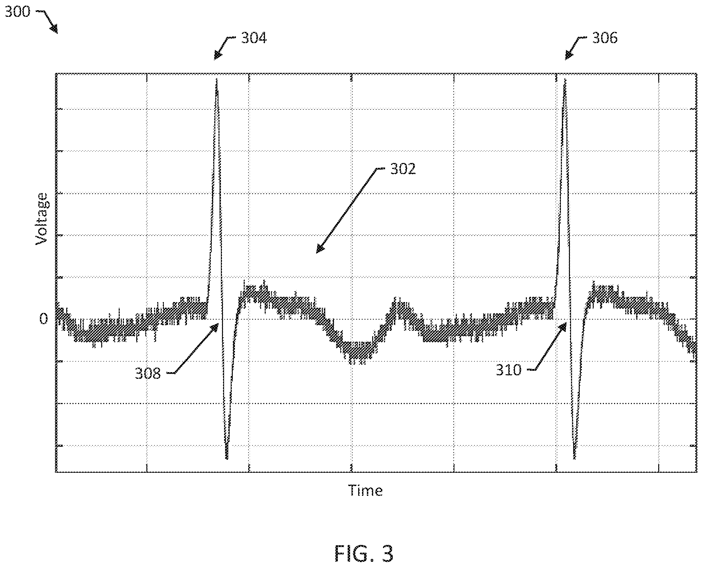

FIG. 3 shows a graph **300** of an example waveform **302** from one of the sensors **114a-f.** The graph **300** shows time on the horizontal axis and the voltage output from the sensor on the vertical axis. In the example illustrated in FIG. 3, the controller detects the passage of two targets indicated by two voltage pulses **304, 306** (containing "negative-sloped" zero crossings **308, 310**) of the waveform **302.** The controller **202** of FIG. 2 is configured to determine the time between the peaks, zero-crossings, or other thresholds of the voltage pulses **304, 306** using methods known to those skilled in the art such as an instrumentation amplifier coupled with a comparator. The controller **202** of FIG. 2 uses timing measurements between target teeth to calculate twist, axial and radial motion of the target wheels **116, 118** as will be explained herein.

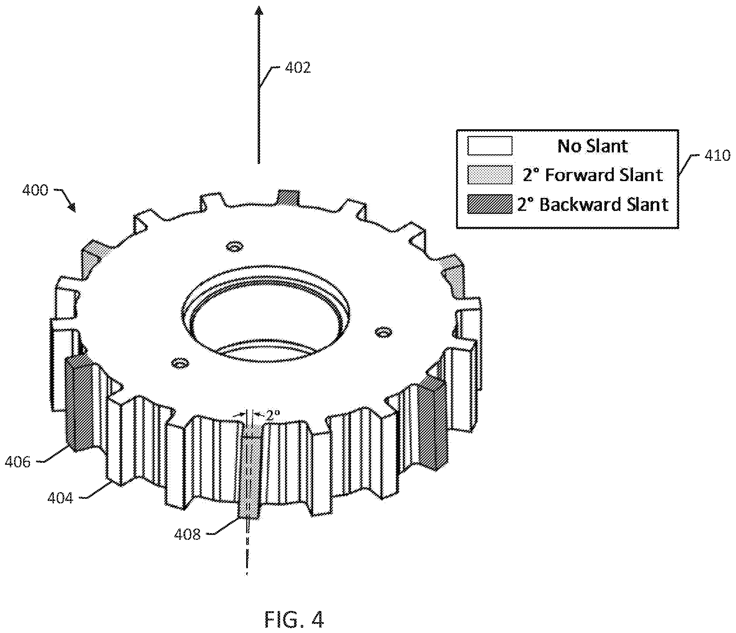

FIG. 4 shows an example target wheel **400** with slanted targets. The target wheel **400** can rotate around a rotational axis extending in a longitudinal direction **402.** The target wheel **400** includes both parallel targets **404** which are substantially parallel with the longitudinal direction **402,** and slanted targets **406, 408** that are slanted with respect to the longitudinal direction **402.** The slanted targets **406, 408** and the parallel targets **404** are circumferentially arranged in an alternating fashion, similar to those illustrated in the target wheel **116** of FIGS. 1A-F.

The slanted targets **406, 408** are slanted in opposite orientations in an alternating fashion around the target wheel **404** as specified in the legend **410.** In particular, the target wheel **400** includes some targets with a forward slant, e.g., slanted target **408,** and some targets with a backwards slant, e.g., slanted target **406.** In the example shown in FIG. 3, the slanted targets **406, 408** each have a 2° slant; however, in general, the slanted targets **406, 408** can be slanted with any appropriate angle from the longitudinal direction **402.**

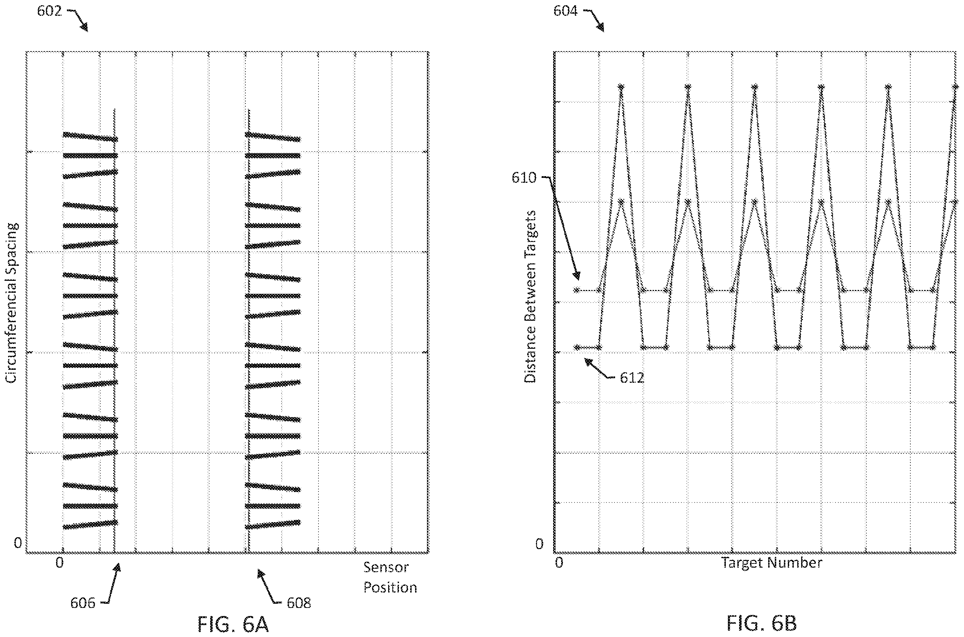

FIG. 5 shows an example axial target pattern for a target wheel having slanted targets, e.g., the target wheel 116 of FIGS. 1A-F. FIG. 6 shows a different example axial target pattern for a target wheel having slanted targets.

Axial motion can be measured using the relative timing of the slanted targets. If the slanting of the targets is done appropriately, the mean timing difference of the targets remains unchanged over a complete rotation, which gives twist, and the relative timing difference of the targets allows axial motion to be calculated, as described hereinbelow. The sensors are nominally located over the center of the targets and as the targets rotate past, the sensors detect the delta time, or *Ts,* of each target with the next. If opposing slants are used, then the timing difference can be "zero mean" and can be filtered out using computationally efficient moving averaging filters.

In the example of FIGS. 5A and 5B, there are 18 targets per target wheel. The chart **502** of FIG. 5A illustrates the orientation of the targets in the direction of the shaft, and the chart **504** of FIG. 5B illustrates axial target spacing as detected by sensors. A first vertical line **506** illustrates a first axial position of the sensors, and a corresponding plot **510** illustrates the distance between targets as measured by the sensors at the first axial position. A second vertical line **508** illustrates a second axial position of the sensor, and a corresponding plot **512** illustrates the distance between targets as measured by the sensors at the second axial position. Both plots **510** and **512** have the same mean distance between targets. The difference between the two plots **510** and **512** can be used to calculate the distance between the first and second axial positions.

FIGS. 6A and 6B illustrate a different example axial target pattern. The chart **602** of FIG. 6A illustrates the orientation of the targets in the direction of the shaft, and the chart **604** of FIG. 6B illustrates axial target spacing as detected by sensors. A first vertical line **606** illustrates a first axial position of the sensors, and a corresponding plot **610** illustrates the distance between targets as measured by the sensors at the first axial position. A second vertical line **608** illustrates a second axial position of the sensor, and a corresponding plot **612** illustrates the distance between targets as measured by the sensors at the second axial position.

To calculate the timing differences due to axial motion, let ${Ts}_{i}^{k}$ be the period between the current target and the previous target zero crossings for the ith sensor and the kth timestep. These timing measurements can be approximated by the following equation: ${Ts}_{i}^{k} = \frac{{f}_{clock}}{{Nf}_{rot}}$ (1)
where *f_{clock}* is the frequency of the processor clock in Hertz, *N* is the number of targets, and *fᵣₒₜ* is the rotational frequency of the spinning target wheel in Hertz. Regardless of the slants in the targets, if the ${Ts}_{i}^{k}$ is moving averaged filtered then the values of timing for the shaft is unaffected: ${\overline{Ts}}_{i}^{k} = \frac{1}{N} \left({Ts}_{i}^{k}+{Ts}_{i}^{k - 1}+⋯+{Ts}_{i}^{k - \left(N-2\right)}+{Ts}_{i}^{k - \left(N-1\right)}\right)$ (2)
Where ${\overline{Ts}}_{i}^{k}$ is the moving average filtered timer delta of ${Ts}_{i}^{k} .$ As will be shown, this average value is not affected by the axial motion. Axial motion does have a slight effect on the timer deltas. In terms of linear distance (L) between targets axial motion has the following effect: $L = \frac{2 πR}{N} + tan \left({θ}_{slant}\right) ∗ Δ {z}_{i}$ (3)
where *R* is the radius of the targets, *N* is the number of targets, Δ*zᵢ* is the axial motion at the "ith" sensor, and *θₛₗₐₙₜ* is the angle of the slanted targets. Using this relationship, the timer deltas of each "ith" sensor can be approximated by the equation below at the *k*th sample. ${Ts}_{i}^{k} = \left(\frac{{f}_{clock}}{{f}_{rot}}\right) \left(\frac{1}{N}\pm \frac{Δ {z}_{i}}{2 πR}tan\left({θ}_{slant}\right)\right)$ (4)
Where the ± is used to indicate whether the delta is increased by the slant angle or decreased by the slant angle. Noted by the physics of the target wheel, every increase in timing is accompanied by an equal decrease in timing.

Consider the following example, where there are 18 targets (*N* = 18) where there are slant angles on the *k -* 2, *k* - 5, *k* - 8, *k* - 11, *k* - 14, and *k* - 17 targets. These slant angles alternate (similar to what is in FIG. 5), which gives the following set of equations: ${Ts}_{i}^{k} = {Ts}_{i}^{k - 3} = {Ts}_{i}^{k - 6} = {Ts}_{i}^{k - 9} = {Ts}_{i}^{k - 12} = {Ts}_{i}^{k - 15} = \frac{{f}_{clock}}{N {f}_{rot}}$ (5) ${Ts}_{i}^{k - 1} = {Ts}_{i}^{k - 5} = {Ts}_{i}^{k - 7} = {Ts}_{i}^{k - 11} = {Ts}_{i}^{k - 13} = {Ts}_{i}^{k - 17} = \frac{{f}_{clock}}{{f}_{rot}} \left(\frac{1}{N}-\frac{Δ {z}_{i}}{2 πR}tan\left({θ}_{slant}\right)\right)$ (6) ${Ts}_{i}^{k - 2} = {Ts}_{i}^{k - 4} = {Ts}_{i}^{k - 8} = {Ts}_{i}^{k - 10} = {Ts}_{i}^{k - 14} = {Ts}_{i}^{k - 16} = \frac{{f}_{clock}}{{f}_{rot}} \left(\frac{1}{N}+\frac{Δ {z}_{i}}{2 πR}tan\left({θ}_{slant}\right)\right)$ (7)

If the moving average filter timer delta $\left({\overline{Ts}}_{i}^{k}\right)$ is calculated by the aforementioned equation in this example, the following equation results: ${\overline{Ts}}_{i}^{k} = \frac{1}{18} \left(6∗{Ts}_{i}^{k}+6∗{Ts}_{i}^{k - 1}+6∗{Ts}_{i}^{k - 2}\right)$ (8) ${\overline{Ts}}_{i}^{k} = \frac{1}{18} \left(6∗\frac{{f}_{clock}}{N {f}_{rot}}+6∗\frac{{f}_{clock}}{N {f}_{rot}}\left(\frac{1}{N}-\frac{Δ {z}_{i}}{2 πR}tan\left({θ}_{slant}\right)\right)+6∗\frac{{f}_{clock}}{{f}_{rot}}\left(\frac{1}{N}+\frac{Δ {z}_{i}}{2 πR}tan\left({θ}_{slant}\right)\right)\right)$ (9) ${\overline{Ts}}_{i}^{k} = \frac{{f}_{clock}}{N {f}_{rot}}$ (10)

The above equation indicates that the Moving Average filtered timer delta is invariant to the slants in the target. To get axial motion from the timer deltas, the following set of filtering is defined where the timer deltas are divided into three separate moving average filters: ${\overline{Ts 1}}_{i}^{k} = \frac{3}{N} \left({\sum }_{n = 0}^{n = 5} {\left(-1\right)}^{n} {Ts}_{i}^{k - 3 ∗ n}\right)$ (11) ${\overline{Ts 2}}_{i}^{k} = \frac{3}{N} \left({\sum }_{n = 0}^{n = 5} {\left(-1\right)}^{n} {Ts}_{i}^{k - 3 ∗ n}\right)$ (12) ${\overline{Ts 3}}_{i}^{k} = \frac{3}{N} \left({\sum }_{n = 0}^{n = 5} {\left(-1\right)}^{n} {Ts}_{i}^{k - 2 - 3 ∗ n}\right)$ (13)

In the preceding example, the following timer delta moving averages result in the following: ${\overline{Ts 1}}_{i}^{k} = \frac{3}{N} \left({\sum }_{n = 0}^{n = 5} {\left(-1\right)}^{n} {Ts}_{i}^{k - 3 ∗ n}\right) = 0$ (14) ${\overline{Ts 2}}_{i}^{k} = \frac{3}{N} \left({\sum }_{n = 0}^{n = 5} {\left(-1\right)}^{n} {Ts}_{i}^{k - 1 - 3 ∗ n}\right) = \frac{{f}_{clock}}{{f}_{rot}} \left(-\frac{Δ {z}_{i}}{2 πR}tan\left({θ}_{slant}\right)\right)$ (15) ${\overline{Ts 3}}_{i}^{k} = \frac{3}{N} \left({\sum }_{n = 0}^{n = 5} {\left(-1\right)}^{n} {Ts}_{i}^{k - 2 - 3 ∗ n}\right) = \frac{{f}_{clock}}{{f}_{rot}} \left(+\frac{Δ {z}_{i}}{2 πR}tan\left({θ}_{slant}\right)\right)$ (16)

Provided that the value of Δ*zᵢ* always remains positive or negative, the axial timer deltas can be combined deterministically to the following: ${\hat{Ts}}_{i}^{k} = \frac{1}{3} \left(\left|{\overline{Ts 1}}_{i}^{k}\right|+\left|{\overline{Ts 2}}_{i}^{k}\right|+\left|{\overline{Ts 3}}_{i}^{k}\right|\right)$ (17) ${\hat{Ts}}_{i}^{k} = \frac{2}{3} \frac{{f}_{clock}}{{f}_{rot}} \left(\frac{Δ {z}_{i}}{2 πR}tan\left({θ}_{slant}\right)\right)$ (18)

These axial timer deltas can be nominally converted to axial displacement at each sensor via the following equation: $Δ {z}_{i} = {\hat{Ts}}_{i}^{k} \frac{3}{2} \frac{{f}_{rot}}{{f}_{clock}} \frac{2 πR}{tan \left({θ}_{slant}\right)}$ (19)

In some embodiments, to calculate an accurate axial motion measurement (Δ*zᵢ*), the axial timer deltas $\left({\hat{Ts}}_{i}^{k}\right)$ may be calibrated over various operating conditions.

Target timing measurements provide for measurement of the following degrees-of-freedom in a shaft segment or coupling: Δx and Δy (radial displacements), θx and θ_{Y} (angular displacements), Δz (axial displacement) and θz or θ_{twist} (twist). U.S. Patent. No. 7,093,504 describes methods and systems for using target timing measurements and is co-owned with the present application as of the date of filing of the present application.

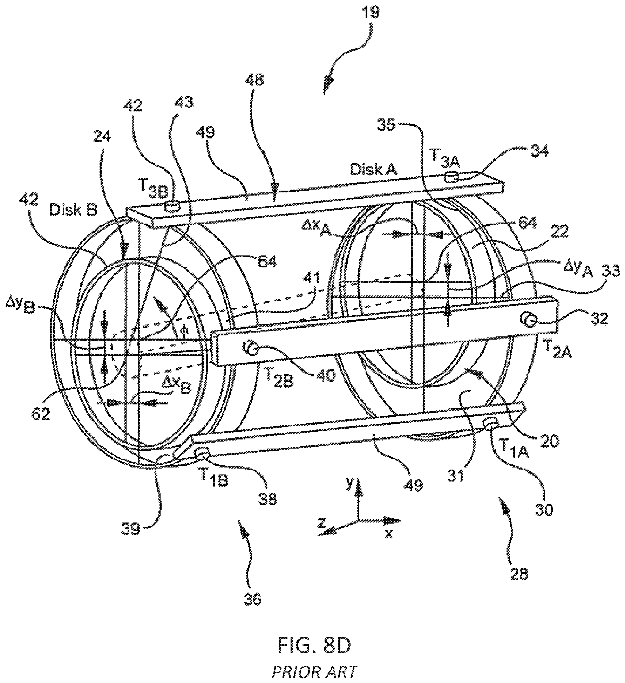

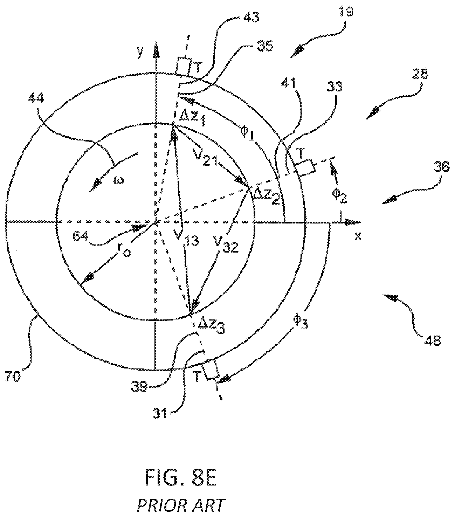

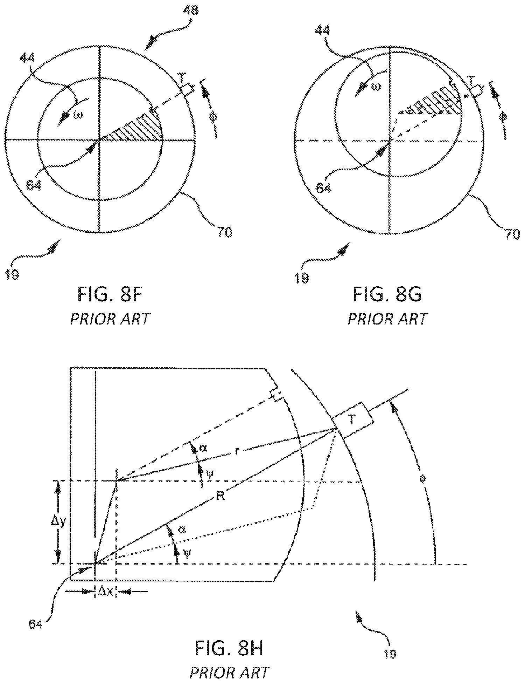

In particular, U.S. Patent. No. 7,093,504 describes the orientation of each sensor as an angle from x axis in the x-y plane in FIG. 4. U.S. Patent. No. 7,093,504 describes using target timing measurements to determine twist in FIGS. 1, 5A, 5B, and 6 and in the specification in col. 15, line 20 - col. 17, line 64. For purposes of illustration, portions of U.S. Patent. No. 7,093,504 are reproduced below in FIGS. 8D - 8H and the corresponding text. U.S. Patent. No. 7,093,504 FIGS. 1, 4, 5A, 5B and 6 are FIGS. 8D, 8E, 8F, 8G, and 8H, respectively.

For example, to illustrate the use of target timing measurements, consider the example system illustrated in FIGS. 8D - 8H. FIGS. 8D - 8H show the use of target timing measurements to determine a twist angle and radial motion.

FIG. 8D shows a twist angle measurement system **19.** The system **19** is comprised of a first rotating disk **20** (Disk A) rotating about a first rotating disk center z-axis **60** with the first disk **20** oriented in an x-y plane, the first rotating disk **20** having a target pattern **22,** a second rotating disk **24** (Disk B) rotating about a second rotating disk center z-axis **62** with the second disk **24** oriented in an x-y plane, the second rotating disk **24** having a target pattern **26,** a sensor cradle **48** centered around a sensor cradle reference z-axis **64,** the sensor cradle **48** encompassing the first rotating disk **20** and the second rotating disk **24** with a first disk first sensor **30** (T_{1A}), a first disk second sensor **32** (T_{2A}), a first disk third sensor **34** (T_{3A}), the first disk first sensor, the first disk second sensor, and the first disk third sensor fixed around and encompassing the first rotating disk **20** and positioned for simultaneously sensing the first rotating disk target pattern **22** and pointed towards center z-axis **60,** and the sensor cradle **48** including a second disk first sensor **38** (T_{1B}), a second disk second sensor **40** (T_{2B}), a second disk third sensor **42** (T_{3B}), the second disk first sensor, the second disk second sensor, and the second disk third sensor fixed around and encompassing the second rotating disk **24** and positioned for simultaneously sensing the second rotating disk target pattern **26** and pointed towards center z-axis **62,** the first disk first sensor **30** (T_{1A}) positioned adjacent the second disk first sensor **38** (T_{3B}), the first disk second sensor **32** (T_{2A}) positioned adjacent the second disk second sensor **40** (T_{2B}), and the first disk third sensor **34** (T_{3A}) positioned adjacent the second disk third sensor **42** (T_{3B}) with the sensors positioned to sense a Δx offset and a Δy offset of the first rotating disk center z-axis **60** from the sensor cradle reference z-axis **64** and a θx offset and a θy offset of first rotating disk relative to sensor cradle and a Δx offset and a Δy offset of the second rotating disk center z-axis **62** from the sensor cradle reference z-axis **64** and a θx offset and a θy offset of second rotating disk relative to sensor cradle to provide for determination of an actual twist angle θ_{twist} between the first rotating disk **20** and the second rotating disk **24** from a sensed apparent twist and the offsets.

The sensor housing cradle **48,** is shown in FIG. 8D as three separate bars or arms **49** with sensors T encompassing the rotating disks **20** and **24.** The arms **49** may be connected together at either end, or they may be constructed as a single mechanical piece that contains all the sensors. An absolute x-y-z coordinate system housing reference frame is defined by the sensor housing **48,** with measurements made relative to the housing reference frame **48.** Note that this absolute coordinate system can move if the rigid sensor housing **48** experiences any motion relative to an inertial reference frame.

While the target disks **20, 24** are spinning, both target disks can experience motions in each of their six rigid body degrees of freedom. The time-varying target disk motions may be relative to the sensor housing **48** and/or relative to each other. FIG. 8D indicates that the axis of rotation of each disk may not be coincident with or parallel to the axis **64** of the sensor housing **48.** The center of Disk A is shown to be offset by an amount {Δx_{A}, Δy_{A}}, and the center of Disk B is shown to be offset by a possibly different amount {Δx_{B}, Δy_{B}}. The disk displacements Δx_{A}(t), Δy_{A}(t)} and {Δx_{B}(t), Δy_{B}(t) can be time-varying.

Referring to U.S. Patent No. 7,093,504, col. 15, lines 20-36, with the reference to equation numbers and figure numbers being updated for consistency with this disclosure, the timing measurements can be used to determine a twist measurement with twist measured as the angular displacement of Disk B relative to Disk A around the z-axis. Preferably the method for measuring twist includes measuring the timing difference between the sensible lines rising (or falling) edges of the pulses from corresponding sensors on Disk A and Disk B. For three sensor arms **49** in FIG. 8D, there are three possible measurements: $\begin{matrix}Δ t \left({↑}_{k}^{1 B}, {↑}_{k}^{1 A}\right) = Δ t \left({↓}_{k}^{1 B}, {↓}_{k}^{1 A}\right) \\ Δ t \left({↑}_{k}^{2 B}, {↑}_{k}^{2 A}\right) = Δ t \left({↓}_{k}^{2 B}, {↓}_{k}^{2 A}\right) \\ Δ t \left({↑}_{k}^{3 B}, {↑}_{k}^{3 A}\right) = Δ t \left({↓}_{k}^{3 B}, {↓}_{k}^{3 A}\right)\end{matrix}$ (20)
where $Δ t \left({↑}_{k}^{1 B}, {↑}_{k}^{1 A}\right)$ represents timing difference between rising target edges on corresponding targets on Disk B and Disk A from sensor T_{1B} and T_{1A}. Furthermore $Δ t \left({↑}_{k}^{1 A}, {↑}_{k + 1}^{1 A}\right)$ represents the time between consecutive rising target edges from sensor T_{1A}, and $Δ t \left({↓}_{k}^{1 A}, {↓}_{k + 1}^{1 A}\right)$ represents the time between consecutive falling edges from sensor T_{1A} on target Disk A. Referring to U.S. Patent No. 7,093,504, col. 15, lines 37-67, with the reference to equation numbers and figure numbers being updated for consistency with this disclosure, we may use either rising or falling edges (both should be equivalent), however, only three of the timing measurements are independent (i.e. one from each pair above).

In the very special case where the offsets of Disk A and Disk B are all zero, i.e. Δ*x*_{A} = Δ*x_{B}* = 0, and Δ*y_{A}* = Δ*y_{B}* = 0, then any one of the measurements in equation 20 along with the instantaneous rotational speed of the shaft will provide a simple and redundant measurement of twist. $\begin{matrix}{{θ}^{˜}}_{1} = {ω}_{shaft} Δ t \left({↑}_{k}^{1 B}, {↑}_{k}^{1 A}\right) \\ {{θ}^{˜}}_{2} = {ω}_{shaft} Δ t \left({↑}_{k}^{2 B}, {↑}_{k}^{2 A}\right) \\ {{θ}^{˜}}_{3} = {ω}_{shaft} Δ t \left({↑}_{k}^{3 B}, {↑}_{k}^{3 A}\right)\end{matrix}$ (21)

The timing measurements will be distorted by offset displacements of the target disks. In this sense, the quantities on the left-hand side of the above equation, i.e. *θ̃*₁, *θ̃*₂, and *θ̃*₃, are apparent twist angles. FIGS. 8F and 8G show an analysis of timing effects associated with *x-y* motion of the target disk. To clarify this point, we first consider only the reference disk as shown in FIG. 8F.

FIG. 8F shows Disk A perfectly centered on the *x-y* axis of the sensor housing **48.** For simplicity, a single notch is drawn on the perimeter of the disk. First we rotate this notch up to the sensor T located at *φ* radians from the x-axis, as indicated by the shaded wedge in FIG. 8F. Now assume Disk A is fixedly offset from the axis **64** of the sensor housing **48,** as shown in FIG. 8G. For the offset example of FIG. 8G, it is clear that rotating the notch through the same *φ* radians will cause the notch to move beyond the sensor.

Referring to U.S. Patent No. 7,093,504, col. 16, lines 1-34, with the reference to equation numbers and figure numbers being updated for consistency with this disclosure and referring to close-up view provided in FIG. 8H, the critical parameter is the relative angle *α* ≡ *φ* - *ψ*. This relative angle can be thought of as the apparent angular distortion induced by offsets in the center of rotation, and measured at the sensor located at *φ*, thus we could write *α* = *α*(*φ*,Δ*x*,Δ*y*). This distortion clearly has a significant impact on the measurement of twist angle and the associated timing pulses from the tachometer sensors. Fortunately, the angular distortion *α* can be related to the offset parameters. $\begin{matrix}r sin ψ = R sin ϕ - Δ y \\ r cos ψ = R cos ϕ - Δ x\end{matrix} ⇒ tan ψ = \left(\frac{sin ϕ - \left(\frac{Δ y}{R}\right)}{cos ϕ - \left(\frac{Δ x}{R}\right)}\right)$ (22)

From the geometric definition of *α* we see that $α \left(ϕ,Δx,Δy\right) = ϕ - {tan}^{- 1} \left(\frac{sin ϕ - \left(\frac{Δ y}{R}\right)}{cos ϕ - \left(\frac{Δ x}{R}\right)}\right)$ (23)
where again *φ* is the known position of the sensor T, and *R* is the known radius of the sensor housing. Referring to U.S. Patent No. 7,093,504, col. 16, lines 36-42 and generally to col. 16, line 43-col. 7, line 35, for small displacements, this simplifies to the following: $\left(\frac{Δ y}{R}\right) < < 1 and \left(\frac{Δ x}{R}\right) < < 1 ⇒ α \left(ϕ,Δx,Δy\right) \approx \left(\frac{Δ y}{R}\right) cos ϕ - \left(\frac{Δ x}{R}\right) sin ϕ$ (24)

Referring generally to U.S. Patent No. 7,093,504, col. 17, lines 36-64, and to equations (25) and (26) below, the following equations can be solved to provide a measure of the twist angle *θ*_{twist} and to provide secondary measures of shaft alignment, i.e., {Δx*_{A},*Δ*y_{A},*Δ*x_{B},*Δ*y_{B}*}. $\left[\begin{matrix}- \left(sin{ϕ}_{1}-sin{ϕ}_{2}\right) & \left(cos{ϕ}_{1}-cos{ϕ}_{2}\right) \\ - \left(sin{ϕ}_{2}-sin{ϕ}_{3}\right) & \left(cos{ϕ}_{2}-cos{ϕ}_{3}\right)\end{matrix}\right] \left[\begin{matrix}Δ {x}_{A} \\ Δ {y}_{A}\end{matrix}\right] = \left[\begin{matrix}{Rω}_{shaft} Δ t \left({↑}_{k}^{1 A}, {↑}_{k}^{2 A}\right) \\ {Rω}_{shaft} Δ t \left({↑}_{k}^{2 A}, {↑}_{k}^{3 A}\right)\end{matrix}\right]$ (25) $\left[\begin{matrix}R & sin {ϕ}_{1} & - cos {ϕ}_{1} \\ R & sin {ϕ}_{2} & - cos {ϕ}_{2} \\ R & sin {ϕ}_{3} & - cos {ϕ}_{3}\end{matrix}\right] \left[\begin{matrix}{θ}_{twist} \\ Δ {x}_{B} \\ Δ {y}_{B}\end{matrix}\right] = \left[\begin{matrix}{Rω}_{shaft} Δ t \left({↑}_{k}^{1 B}, {↑}_{k}^{1 A}\right) + Δ {x}_{A} sin {ϕ}_{1} - Δ {y}_{A} cos {ϕ}_{1} \\ {Rω}_{shaft} Δ t \left({↑}_{k}^{2 B}, {↑}_{k}^{2 A}\right) + Δ {x}_{A} sin {ϕ}_{2} - Δ {y}_{A} cos {ϕ}_{2} \\ {Rω}_{shaft} Δ t \left({↑}_{k}^{3 B}, {↑}_{k}^{3 A}\right) + Δ {x}_{A} sin {ϕ}_{3} - Δ {y}_{A} cos {ϕ}_{3}\end{matrix}\right]$ (26)

These equations are non-singular and solvable since we generally can choose the placement of sensors. A least squares solution can also be used.

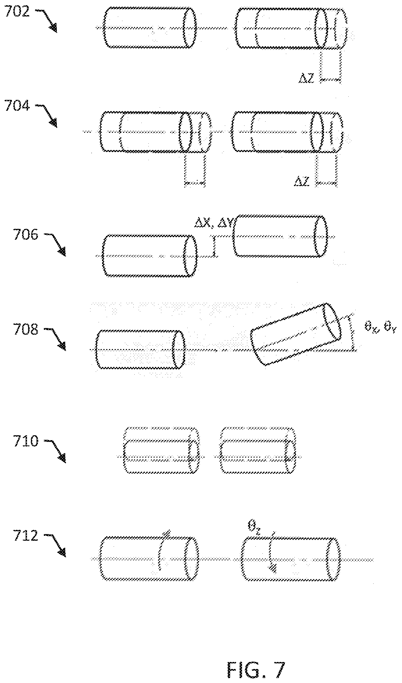

These measurements, in turn, allow for measurement of the shaft alignment parameters shown in FIG. 7.

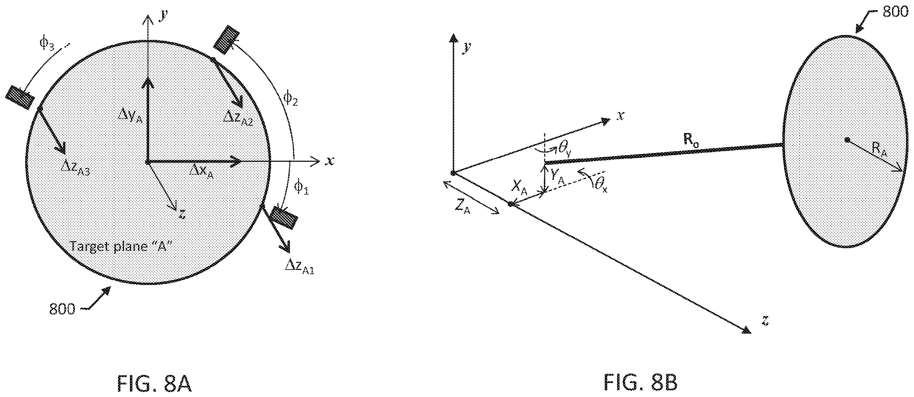

Referring back to FIGS. 8A and 8B, for each target plane, target timing measurements within that plane can be used to assess the deflection of the target plane centroid with respect to the sensor array. These deflections are defined in FIG. 8A. In particular, equation 15 of U.S. Patent. No. 7,093,504, which is equation 26 above, provides the computation of Δx_{A} and Δy_{A} based on timing measurements, and the above calculations provide the computation of Δz_{Ai} based on timing measurements of slanted targets. While the computation of Δx_{A}, Δy_{A}, Δx_{B}, and Δy_{B} in U.S. Patent. No. 7,093,504 is accurate, assumptions about the general motion of the shaft or coupling under measurement must be made. In essence, the measurement detailed in U.S. Patent. No. 7,093,504 cannot distinguish between translational and rotational motion of the target wheels. The addition of Δz_{Ai} axial measurements allows the translation and rotational motion of the target wheels to be accurately distinguished as demonstrated in the forthcoming math.

The following computations illustrate a method for transforming timing-based measurements of target plane centroid deflections into relevant shaft or coupling alignment values as defined in FIG. 8B. Namely, these enable the following: $\left[{X}_{A}, {Y}_{A}, {Z}_{A}, {θ}_{x}, {θ}_{y}\right] = f \left(\left[Δ{x}_{A},Δ{y}_{A},Δ{z}_{A 1},Δ{z}_{A 2},Δ{z}_{A 3}\right]\right)$ (27)

Similar calculations can be completed for the second target plane "B" and the results are summed with the results from target plane "A" to yield total coupling alignment values.

The following computations assume that θₓ and θ_{y} are small angles such that sin θ ≈ θ and cos θ ≈ 1. An analytical solution exists for the more precise solution, but is not included here for brevity. Simple trigonometry can demonstrate that $\left[\begin{matrix}Δ {z}_{A 1} \\ Δ {z}_{A 2} \\ Δ {z}_{A 3}\end{matrix}\right] = \left[\begin{matrix}{R}_{A} sin \left({φ}_{1}\right) & {R}_{A} cos \left({φ}_{1}\right) & 1 \\ {R}_{A} sin \left({φ}_{2}\right) & {R}_{A} cos \left({φ}_{2}\right) & 1 \\ {R}_{A} sin \left({φ}_{3}\right) & {R}_{A} cos \left({φ}_{3}\right) & 1\end{matrix}\right] \left[\begin{matrix}{θ}_{x} \\ {θ}_{y} \\ {Z}_{A}\end{matrix}\right] = {T}_{A} \left[\begin{matrix}{θ}_{x} \\ {θ}_{y} \\ {Z}_{A}\end{matrix}\right]$ (28)

Coupling alignment values can then be calculated from $\left[\begin{matrix}{θ}_{x} \\ {θ}_{y} \\ {Z}_{A}\end{matrix}\right] = {{T}_{A}}^{- 1} \left[\begin{matrix}Δ {z}_{A 1} \\ Δ {z}_{A 2} \\ Δ {z}_{A 3}\end{matrix}\right]$ (29)

Finally it can be shown that $\left[\begin{matrix}{X}_{A} \\ {Y}_{A}\end{matrix}\right] = \left[\begin{matrix}Δ {x}_{A} \\ Δ {y}_{A}\end{matrix}\right] - {R}_{0} \left[\begin{matrix}{θ}_{y} \\ {θ}_{x}\end{matrix}\right]$ (30)
where θₓ and θ_{y} are computed as shown above. So these equations together provide the transformation of timing-based measurements of target plane centroid deflections into relevant shaft or coupling alignment values as shown above.

FIG. 7 illustrates various types of shaft or coupling alignments that can be determined using the systems and methods described in this specification. FIGS. 8A and 8B illustrate the variables used in the following discussion with reference to an example target plane 800, labelled target plane "A," of a target wheel. FIG. 8A depicts the target plane **800** and various deflections of the target plane **800.** FIG. 8B shows the target plane **800** with respect to an axis to define shaft or coupling alignment values, where *X_{A}, Y_{A}, Z_{A}, θ_{xA},* and *θ_{yA}* correspond to radial alignment in the x and y direction, axial alignment and angular alignments, respectively, for the target plane "A." This labelling process can be repeated for a different "B" target wheel where *X_{B}, Y_{B}, Z_{B}, θ_{xB},* and *θ_{yB}* are the variables corresponding to the target wheel motions.

To further illustrate the alignment values Z_{A} and R₀, consider the following. Referring to FIG. 8A, in the exact geometric center of the target wheel **800,** there is a point (Δx_{A}, Δy_{A}), and with no motion (*X_{A}, Y_{A}, Z_{A}, θ_{xA},* and *θ_{yA}* = 0) this point lies on the z-axis. As the target wheel moves, this point will displace and if some displacement is in the axial direction, Z_{A} is no longer equal to 0. R₀ is the articulation radius of the coupling. For two target wheels, consider two possible scenarios: one, the target wheels are on a stiff shaft, and R₀ = 1/2 the distance between the target wheels; or two, the target wheels are on a coupling, and R₀ is the distance between the target wheel and the point where the normal vectors of the x-y planes of each target wheel intersect.

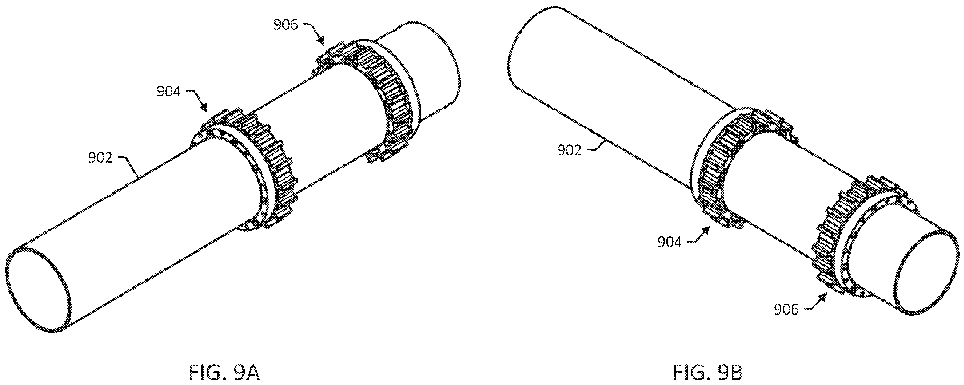

Referring back to FIG. 7, in each example alignment shown, two target wheels are depicted, including a first target wheel "A" on the left and a second target wheel "B" on the right. The alignment values for both target wheels can be understood from FIGS. 8A and 8B because the alignment values for the second target wheel, "B," are defined the same as those for the first target wheel, "A," which is shown in FIGS. 8A and 8B. The A and B target wheels can be on different shafts across a coupling, e.g., as illustrated in FIGS. 1A - 1H, or the A and B target wheels can each be on the same shaft, e.g., as illustrated in FIGS. 9A - 9D.

The alignment values shown in Figure 7 may occur in combination. Geometric computations allow for resolution of individual shaft alignment profiles and is described further below.

A first example alignment **702** illustrates axial strain. The axial strain between the A and B targets is proportional to the following: $Δ z = {Z}_{B} - {Z}_{A} - 2 {R}_{0}$ (31)
where Δz is the axial displacement measured along the z-axis, Z_{B} is the axial displacement of target B, Z_{A} is the axial displacement of target A, and R₀ is radial distance between a target A or target B and a point centered between target A or target B.

A second example alignment **704** illustrates bulk axial displacement of both target wheels together. The axial displacement of the A and B targets is determined by the following: $Σ z = \left({Z}_{B}+{Z}_{A}\right) / 2$ (32)

A third example alignment **706** illustrates parallel (or offset) misalignment and translational whirl (or runout), and a fourth example alignment **708** illustrates angular misalignment and bending whirl. The overall angular misalignment between targets A and B is the following: $θ = \sqrt{{\left({θ}_{xA}-{θ}_{xB}\right)}^{2} + {\left({θ}_{yA}-{θ}_{yB}\right)}^{2}}$ (33)

The overall parallel misalignment or offset between the A and B targets is the following: $r = \sqrt{{\left({X}_{A}-{X}_{B}\right)}^{2} + {\left({X}_{A}-{X}_{B}\right)}^{2}}$ (34)

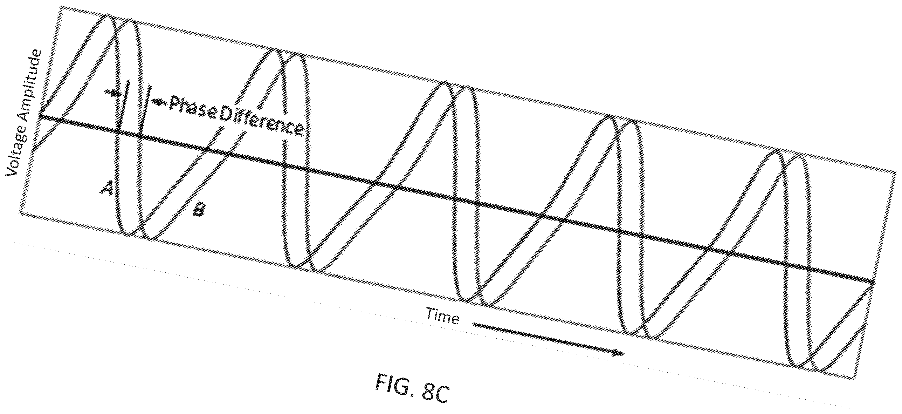

A fifth example alignment **710** illustrates run-out, and a sixth example alignment 712 illustrates twist and torsional dynamics. Run-out is radial translation that occurs synchronously with the shaft rotational speed. As twist across the shaft or coupling occurs, a phase difference can be observed between sensors on the A and B target wheels. The phase difference between two sensors can be converted to twist. FIG. 8C shows example sensor waveforms illustrating a phase difference between two sensors.

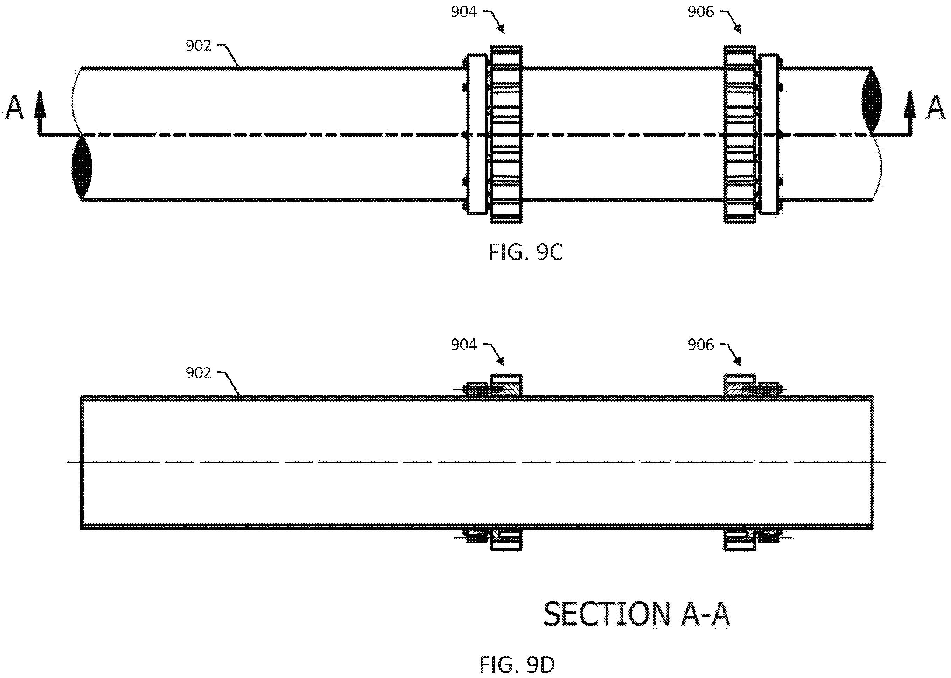

FIGS. 9A-9D illustrate an example shaft **902** having two target wheels **904, 906** on the shaft **902.** FIG. 9A shows a first perspective view of the shaft **902** and the two target wheels **904, 906,** and FIG. 9B shows a second perspective view of the shaft **902** and the two target wheels **904, 906.** FIG. 9C is a side view of the shaft **902** and the two target wheels **904, 906.** FIG. 9D is a cross-sectional view of the shaft **902** the two target wheels **904, 906.** Placing two target wheels on the same shaft **902** can be useful, e.g., to measure the same variables described above with reference to couplings, but across different portions of the same shaft **902** instead of across a coupling.

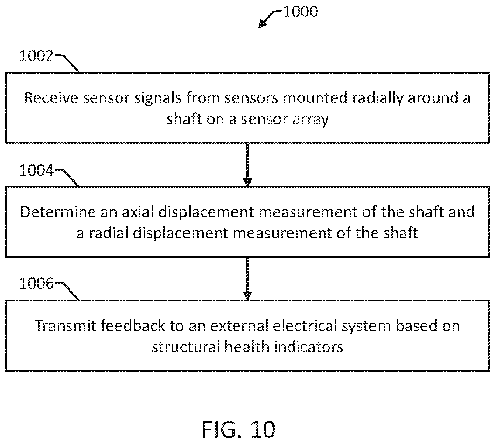

FIG. 10 is a flow diagram of an example method **1000** performed by a controller of a measurement system, e.g., the controller **202** of FIG. 2. The method **1000** includes receiving sensor signals from sensors mounted radially around a shaft on a sensor array **(1002).** The sensors are oriented to a target wheel, e.g., as described above with reference to FIGS. 1A-1H and FIGS. 9A - 9D. The method **1000** includes determining, based on the sensor signals, at least an axial displacement measurement of the shaft and a radial displacement measurement of the shaft **(1004).** The method **1000** optionally includes transmitting feedback to a signal interface comprising real-time feedback parameters or structural health indicators, e.g., as described above with reference to FIGS. 1A-1H and FIG. 2 **(1006).**

## Claims

1. A measurement system comprising:
a shaft (102, 902, 1004) extended in a longitudinal direction (126, 402);
a target wheel (116, 118, 400, 800, 904, 906) configured to rotate with the shaft, wherein the target wheel comprises a plurality of sensor targets (120, 122, 124, 130a-h, 404, 406, 408) circumferentially distributed around the target wheel, and wherein the plurality of sensor targets includes a first plurality of targets (122, 124, 406, 408) that are slanted in the longitudinal direction (126, 402) and a second plurality of targets (120, 404) that are parallel to the longitudinal direction (126, 402);
a sensor array (106, 108, 110, 112, 1002) comprising at least three sensors (114a-f) mounted radially around the shaft and configured to detect the plurality of sensor targets as the target wheel rotates with the shaft; and
a controller (202) configured to receive sensor signals from the at least three sensors and determine, based on the sensor signals, at least an axial displacement measurement of the shaft in the longitudinal direction and a radial displacement measurement of the shaft;
**characterized in that** the first plurality of targets includes at least a first slanted target (122, 406) slanted in an opposite orientation, in the longitudinal direction, to at least a second slanted target (124, 408).

2. The measurement system of claim 1, wherein the controller (202) is configured to determine the axial displacement measurement of the shaft (102, 902, 1004) based on a relative timing difference between detecting the first plurality of targets (122, 124, 406, 408) and the second plurality of targets (120, 404).

3. The measurement system of claim 1, wherein the first plurality of targets (122, 124, 406, 408) and the second plurality of targets (120, 404) are disposed radially around the target wheel (116, 118, 400, 800, 904, 906) in an alternating fashion.

4. The measurement system of claim 1, further comprising a second target wheel (118, 400, 800, 906) configured to rotate with the shaft (102, 902, 1004), wherein the second target wheel comprises a plurality of sensor targets circumferentially distributed around the second target wheel and a second sensor array (108, 1002) comprising at least three sensors (114a-f) mounted radially around the shaft and configured to detect the plurality of sensor targets as the second target wheel rotates with the shaft.

5. The measurement system of claim 4, wherein the controller (202) is configured to determine a twist measurement of the shaft (102, 902, 1004) using a mean timing difference between detecting the sensor targets (130a-h) on the target wheel (116, 400, 800, 904) and the second target wheel (118, 400, 800, 906).

6. The measurement system of claim 4, wherein the controller (202) is configured to determine one or more or all of: axial strain, axial displacement, parallel misalignment, angular misalignment, run-out, and twist.

7. The measurement system of claim 4, wherein the controller (202) is configured to transmit a safety critical feedback or one or more structural health indicators to a signal interface.

8. The measurement system of claim 7, wherein the target wheel (116, 400, 800, 904) and the sensor array (106, 108, 110, 112, 1002) are located at a first end of a rotational coupling that is coupled to the shaft (102, 902, 1004), and the second target wheel (118, 400, 800, 906) and second sensor array (108, 1002) are located at a second end of the rotational coupling, opposite the first end in the longitudinal direction (126, 402), that is coupled to a different shaft (102, 902, 1004), and wherein the controller (202) is configured to determine the one or more structural health indicators of the rotational coupling based on the sensor signals from the sensor array (106, 108, 110, 112, 1002) and second sensor signals from the second sensor array (108, 1002).

9. The measurement system of claim 1, wherein each sensor target of the plurality of sensor targets (120, 122, 124, 130a-h, 404, 406, 408) comprises one or more of: a conductive target, an optical target, and a ferrous target.

10. The measurement system of claim 1, wherein the plurality of sensor targets (120, 122, 124, 130a-h, 404, 406, 408) are uniformly spaced circumferentially around the target wheel (116, 118, 400, 800, 904, 906).

11. The measurement system of claim 1, wherein each sensor of the at least three sensors (114a-f) comprises a variable reluctance sensor; or wherein each sensor of the at least three sensors comprises a non-contact active inductive proximity sensor or a non-contact capacitive proximity sensor; or wherein each sensor of the at least three sensors comprises an optical sensor.

12. A method performed by a controller (202) of a measurement system, the method comprising:
receiving sensor signals from each of at least three sensors (114a-f) mounted radially around a shaft (102, 902, 1004) on a sensor array (106, 108, 110, 112, 1002), wherein the shaft is extended in a longitudinal direction (126, 402), and wherein the sensor array is configured to position the at least three sensors for detecting a plurality of sensor targets (120, 122, 124, 130a-h, 404, 406, 408) circumferentially distributed around a target wheel (116, 118, 400, 800, 904, 906) as the target wheel (116, 400, 800, 904) rotates with the shaft, wherein the plurality of sensor targets includes a first plurality of targets (122, 124, 406, 408) that are slanted in the longitudinal direction and a second plurality of targets (120, 404) that are parallel to the longitudinal direction, and wherein the first plurality of targets includes at least a first slanted target (122, 406) slanted in an opposite orientation, in the longitudinal direction, to at least a second slanted target (124, 408); and
determining, based on the sensor signals, at least an axial displacement measurement of the shaft in the longitudinal direction and a radial displacement measurement of the shaft.

13. The method of claim 12, wherein determining the axial displacement measurement of the shaft (102, 902, 1004) in the longitudinal direction (126, 402) comprises determining the axial displacement measurement based on a relative timing difference between detecting the first plurality of targets (122, 124, 406, 408) and the second plurality of targets (120, 404).

14. The method of claim 13, wherein the first plurality of targets (122, 124, 406, 408) are slanted at a slant angle in the longitudinal direction (126, 402), the method comprising determining the relative timing distance using the slant angle, a radius of the plurality of targets, and a total number of targets on the target wheel (116, 118, 400, 800, 904, 906).

15. The method of claim 12, comprising determining a twist measurement and the axial displacement measurement by applying a moving average filter to the sensor signals.

16. The method of claim 12, comprising determining a twist measurement of the shaft (102, 902, 1004) using a mean timing distance between detecting the sensor targets.

17. The method of claim 12, comprising determining the one or more or all of: axial strain, axial displacement, parallel misalignment, angular misalignment, run-out, and twist.

18. The method of claim 12, comprising transmitting safety critical feedback or one or more structural health indicators to a signal interface.

## Patentansprüche

1. Messsystem, umfassend:
eine Welle (102, 902, 1004), die sich in einer Längsrichtung (126, 402) erstreckt;
ein Zielrad (116, 118, 400, 800, 904, 906), das konfiguriert ist, um sich mit der Welle zu drehen, wobei das Zielrad mehrere Sensorziele (120, 122, 124, 130a-h, 404, 406, 408) umfasst, die in Umfangsrichtung um das Zielrad herum verteilt sind, und wobei die mehreren Sensorziele mehrere erste Ziele (122, 124, 406, 408), die in der Längsrichtung (126, 402) geneigt sind, und mehrere zweite Ziele (120, 404), die parallel zu der Längsrichtung (126, 402) sind, beinhaltet;
eine Sensoranordnung (106, 108, 110, 112, 1002), umfassend mindestens drei Sensoren (114a-f), die radial um die Welle herum montiert sind und konfiguriert sind, um die mehreren Sensorziele zu erfassen, wenn sich das Zielrad mit der Welle dreht; und
eine Steuerung (202), die konfiguriert ist, um Sensorsignale von den mindestens drei Sensoren zu empfangen und um, basierend auf den Sensorsignalen, mindestens eine Axialverschiebungsmessung der Welle in Längsrichtung und eine Radialverschiebungsmessung der Welle zu bestimmen;
**dadurch gekennzeichnet, dass** die mehreren ersten Ziele mindestens ein erstes geneigtes Ziel (122, 406) beinhaltet, das in Längsrichtung in einer entgegengesetzten Ausrichtung zu mindestens einem zweiten geneigten Ziel (124, 408) geneigt ist.

2. Messsystem nach Anspruch 1, wobei eine Steuerung (202) konfiguriert ist, um die Axialverschiebungsmessung der Welle (102, 902, 1004) basierend auf einer relativen Zeitdifferenz zwischen der Erfassung der mehreren ersten Ziele (122, 124, 406, 408) und der mehreren zweiten Ziele (120, 404) zu bestimmen.

3. Messsystem nach Anspruch 1, wobei die mehreren ersten Ziele (122, 124, 406, 408) und die mehreren zweiten Ziele (120, 404) abwechselnd radial um das Zielrad (116, 118, 400, 800, 904, 906) herum angeordnet sind.

4. Messsystem nach Anspruch 1, ferner umfassend ein zweites Zielrad (118, 400, 800, 906), das konfiguriert ist, um sich mit der Welle (102, 902, 1004) zu drehen, wobei das zweite Zielrad mehrere Sensortargets umfasst, die in Umfangsrichtung um das zweite Zielrad herum verteilt sind, und eine zweite Sensoranordnung (108, 1002), umfassend mindestens drei Sensoren (114a-f), die radial um die Welle herum montiert sind und konfiguriert sind, um die mehreren Sensorziele zu erfassen, wenn sich das zweite Zielrad mit der Welle dreht.

5. Messsystem nach Anspruch 4, wobei die Steuerung (202) so konfiguriert ist, dass sie eine Verdrehungsmessung der Welle (102, 902, 1004) unter Verwendung einer mittleren Zeitdifferenz zwischen der Erfassung der Sensorziele (130a-h) am Zielrad (116, 400, 800, 904) und dem zweiten Zielrad (118, 400, 800, 906) bestimmt.

6. Messsystem nach Anspruch 4, wobei die Steuerung (202) konfiguriert ist, um eine oder mehrere oder alle der Folgenden zu bestimmen:
Achsenspannung, Axialverschiebung, Parallelverschiebung, Winkelverschiebung, Rundlauf und Verdrehung.

7. Messsystem nach Anspruch 4, wobei die Steuerung (202) konfiguriert ist, um eine sicherheitskritische Rückmeldung oder einen oder mehrere strukturelle Zustandsindikatoren an eine Signalschnittstelle zu übertragen.

8. Messsystem nach Anspruch 7, wobei das Zielrad (116, 400, 800, 904) und die Sensoranordnung (106, 108, 110, 112, 1002) an einem ersten Ende einer Drehkupplung angeordnet sind, die mit der Welle (102, 902, 1004) gekoppelt ist, und wobei das zweite Zielrad (118, 400, 800, 906) und die zweite Sensoranordnung (108, 1002) an einem zweiten Ende der Drehkupplung angeordnet sind, gegenüber dem ersten Ende in der Längsrichtung (126, 402), das mit einer anderen Welle (102, 902, 1004) gekoppelt ist, und wobei die Steuerung (202) konfiguriert ist, um den einen oder mehrere strukturelle Zustandsindikatoren der Drehkupplung basierend auf den Sensorsignalen von der Sensoranordnung (106, 108, 110, 112, 1002) und zweiten Sensorsignalen von der zweiten Sensoranordnung (108, 1002) zu bestimmen.

9. Messsystem nach Anspruch 1, wobei jedes Sensorziel der mehreren Sensorziele (120, 122, 124, 130a-h, 404, 406, 408) eines oder mehrere der Folgenden umfasst:
ein leitfähiges Ziel, ein optisches Ziel und ein eisenhaltiges Ziel.

10. Messsystem nach Anspruch 1, wobei die mehreren Sensorziele (120, 122, 124, 130a-h, 404, 406, 408) gleichmäßig in Umfangsrichtung um das Zielrad (116, 118, 400, 800, 904, 906) herum beabstandet sind.

11. Messsystem nach Anspruch 1, wobei jeder Sensor der mindestens drei Sensoren (114a-f) einen Sensor mit variabler Reluktanz umfasst; oder
wobei jeder Sensor der mindestens drei Sensoren einen berührungslosen aktiven induktiven Näherungssensor oder einen berührungslosen kapazitiven Näherungssensor umfasst; oder
wobei jeder Sensor der mindestens drei Sensoren einen optischen Sensor umfasst.

12. Verfahren, das durch eine Steuerung (202) eines Messsystems durchgeführt wird, wobei das Verfahren Folgendes umfasst:
Empfangen von Sensorsignalen von jedem von mindestens drei Sensoren (114a-f), die radial um eine Welle (102, 902, 1004) an einer Sensoranordnung (106, 108, 110, 112, 1002) montiert sind, wobei sich die Welle in einer Längsrichtung (126, 402) erstreckt, und wobei die Sensoranordnung konfiguriert ist, um die mindestens drei Sensoren zum Erfassen mehrerer Sensorziele (120, 122, 124, 130a-h, 404, 406, 408) zu positionieren, die in Umfangsrichtung um ein Zielrad (116, 118, 400, 800, 904, 906) herum verteilt sind, während sich das Zielrad (116, 400, 800, 904) mit der Welle dreht, wobei die mehreren Sensorziele mehrere erste Ziele (122, 124, 406, 408), die in Längsrichtung geneigt sind, und mehrere zweite Ziele (120, 404), die parallel zur Längsrichtung sind beinhalten, und wobei die mehreren ersten Ziele mindestens ein erstes geneigtes Ziel (122, 406) beinhalten, das in einer entgegengesetzten Ausrichtung in Längsrichtung zu mindestens einem zweiten geneigten Ziel (124, 408) geneigt ist; und
Bestimmen, basierend auf den Sensorsignalen, mindestens einer Axialverschiebungsmessung der Welle in Längsrichtung und einer Radialverschiebungsmessung der Welle.

13. Verfahren nach Anspruch 12, wobei das Bestimmen der Axialverschiebungsmessung der Welle (102, 902, 1004) in der Längsrichtung (126, 402) das Bestimmen der Axialverschiebungsmessung basierend auf einer relativen Zeitdifferenz zwischen dem Erfassen der mehreren ersten Ziele (122, 124, 406, 408) und der mehreren zweiten Ziele (120, 404) umfasst.

14. Verfahren nach Anspruch 13, wobei die mehreren ersten Ziele (122, 124, 406, 408) unter einem Neigungswinkel in der Längsrichtung (126, 402) geneigt sind, wobei das Verfahren das Bestimmen des relativen zeitlichen Abstands unter Verwendung des Neigungswinkels, eines Radius der mehreren Ziele und einer Gesamtzahl von Zielen am Zielrad (116, 118, 400, 800, 904, 906) umfasst.

15. Verfahren nach Anspruch 12, umfassend das Bestimmen einer Verdrehungsmessung und der Axialverschiebungsmessung durch Anwenden eines Filters mit beweglichem Mittelwert auf die Sensorsignale.

16. Verfahren nach Anspruch 12, umfassend das Bestimmen einer Verdrehungsmessung der Welle (102, 902, 1004) unter Verwendung eines mittleren zeitlichen Abstands zwischen dem Erfassen der Sensorziele.

17. Verfahren nach Anspruch 12, umfassend das Bestimmen des einen oder mehrerer oder aller der Folgenden:
Achsenspannung, Axialverschiebung, Parallelverschiebung, Winkelverschiebung, Rundlauf und Verdrehung.

18. Verfahren nach Anspruch 12, umfassend das Übertragen einer sicherheitskritischen Rückmeldung oder eines oder mehrerer struktureller Zustandsindikatoren an eine Signalschnittstelle.

## Revendications

1. Système de mesure comprenant :
un arbre (102, 902, 1004) étendu dans une direction longitudinale (126, 402) ;
une roue cible (116, 118, 400, 800, 904, 906) conçue pour tourner avec l'arbre, la roue cible comprenant une pluralité de cibles de capteur (120, 122, 124, 130a-h, 404, 406, 408) réparties circonférentiellement autour de la roue cible, et la pluralité de cibles de capteur comportant une première pluralité de cibles (122, 124, 406, 408) qui sont inclinées dans la direction longitudinale (126, 402) et une seconde pluralité de cibles (120, 404) qui sont parallèles à la direction longitudinale (126, 402) ;
un réseau de capteurs (106, 108, 110, 112, 1002) comprenant au moins trois capteurs (114a-f) montés radialement autour de l'arbre et conçus pour détecter la pluralité de cibles de capteur lorsque la roue cible tourne avec l'arbre ; et
un dispositif de commande (202) conçu pour recevoir des signaux de capteur provenant des au moins trois capteurs et déterminer, sur la base des signaux de capteur, au moins une mesure de déplacement axial de l'arbre dans la direction longitudinale et une mesure de déplacement radial de l'arbre ;
**caractérisé en ce que** la première pluralité de cibles comporte au moins une première cible inclinée (122, 406) inclinée dans une orientation opposée, dans la direction longitudinale, à au moins une seconde cible inclinée (124, 408).

2. Système de mesure selon la revendication 1, dans lequel le dispositif de commande (202) est configuré pour déterminer la mesure de déplacement axial de l'arbre (102, 902, 1004) sur la base d'une différence de synchronisation relative entre la détection de la première pluralité de cibles (122, 124, 406, 408) et la seconde pluralité de cibles (120, 404).

3. Système de mesure selon la revendication 1, dans lequel la première pluralité de cibles (122, 124, 406, 408) et la seconde pluralité de cibles (120, 404) sont disposées radialement autour de la roue cible (116, 118, 400, 800, 904, 906) en alternance.

4. Système de mesure selon la revendication 1, comprenant en outre une seconde roue cible (118, 400, 800, 906) conçue pour tourner avec l'arbre (102, 902, 1004), dans lequel la seconde roue cible comprend une pluralité de cibles de capteur réparties circonférentiellement autour de la seconde roue cible et un second réseau de capteurs (108, 1002) comprenant au moins trois capteurs (114a-f) montés radialement autour de l'arbre et conçus pour détecter la pluralité de cibles de capteur lorsque la seconde roue cible tourne avec l'arbre.

5. Système de mesure selon la revendication 4, dans lequel le dispositif de commande (202) est conçu pour déterminer une mesure de torsion de l'arbre (102, 902, 1004) à l'aide d'une différence de synchronisation relative moyenne entre la détection des cibles de capteur (130ah) sur la roue cible (116, 400, 800, 904) et la seconde roue cible (118, 400, 800, 906).

6. Système de mesure selon la revendication 4, dans lequel le dispositif de commande (202) est conçu pour déterminer l'un ou plusieurs ou la totalité parmi : une déformation axiale, un déplacement axial, un désalignement parallèle, un désalignement angulaire, un faux-rond et une torsion.

7. Système de mesure selon la revendication 4, dans lequel le dispositif de commande (202) est conçu pour transmettre une rétroaction critique de sécurité ou un ou plusieurs indicateurs de santé structurelle à une interface de signal.

8. Système de mesure selon la revendication 7, dans lequel la roue cible (116, 400, 800, 904) et le réseau de capteurs (106, 108, 110, 112, 1002) sont situés à une première extrémité d'un accouplement rotatif qui est accouplé à l'arbre (102, 902, 1004), et la seconde roue cible (118, 400, 800, 906) et le second réseau de capteurs (108, 1002) sont situés à une seconde extrémité de l'accouplement rotatif, à l'opposé de la première extrémité dans la direction longitudinale (126, 402), qui est accouplé à un arbre différent (102, 902, 1004), et dans lequel le dispositif de commande (202) est configuré pour déterminer le ou les indicateurs de santé structurelle de l'accouplement rotatif sur la base des signaux de capteur provenant du réseau de capteurs (106, 108, 110, 112, 1002) et des seconds signaux de capteur provenant du second réseau de capteurs (108, 1002).

9. Système de mesure selon la revendication 1, dans lequel chaque cible de capteur de la pluralité de cibles de capteur (120, 122, 124, 130a-h, 404, 406, 408) comprend une ou plusieurs cibles parmi : une cible conductrice, une cible optique et une cible ferreuse.

10. Système de mesure selon la revendication 1, dans lequel la pluralité de cibles de capteur (120, 122, 124, 130a-h, 404, 406, 408) sont uniformément espacées circonférentiellement autour de la roue cible (116, 118, 400, 800, 904, 906).

11. Système de mesure selon la revendication 1, dans lequel chaque capteur des au moins trois capteurs (114a-f) comprend un capteur à réluctance variable ; ou dans lequel chaque capteur des au moins trois capteurs comprend un capteur de proximité inductif actif sans contact ou un capteur de proximité capacitif sans contact ; ou dans lequel chaque capteur des au moins trois capteurs comprend un capteur optique.

12. Procédé effectué par un dispositif de commande (202) d'un système de mesure, le procédé comprenant :
la réception de signaux de capteur de chacun d'au moins trois capteurs (114a-f) montés radialement autour d'un arbre (102, 902, 1004) sur un réseau de capteurs (106, 108, 110, 112, 1002), dans lequel l'arbre est étendu en une direction longitudinale (126, 402), et dans lequel le réseau de capteurs est conçu pour positionner les au moins trois capteurs pour détecter une pluralité de cibles de capteur (120, 122, 124, 130a-h, 404, 406, 408) réparties circonférentiellement autour d'une roue cible (116, 118, 400, 800, 904, 906) lorsque la roue cible (116, 400, 800, 904) tourne avec l'arbre, dans lequel la pluralité de cibles de capteur comporte une première pluralité de cibles (122, 124, 406, 408) qui sont inclinées dans la direction longitudinale et une seconde pluralité de cibles (120, 404) qui sont parallèles à la direction longitudinale, et dans lequel la première pluralité de cibles comporte au moins une première cible inclinée (122, 406) inclinée dans une orientation opposée, dans la direction longitudinale, à au moins une seconde cible inclinée (124, 408) ; et
la détermination, sur la base des signaux de capteur, d'au moins une mesure de déplacement axial de l'arbre dans la direction longitudinale et une mesure de déplacement radial de l'arbre.

13. Procédé selon la revendication 12, dans lequel la détermination de la mesure de déplacement axial de l'arbre (102, 902, 1004) dans la direction longitudinale (126, 402) comprend la détermination de la mesure de déplacement axial sur la base d'une différence de synchronisation relative entre la détection de la première pluralité de cibles (122, 124, 406, 408) et la seconde pluralité de cibles (120, 404).

14. Procédé selon la revendication 13, dans lequel la première pluralité de cibles (122, 124, 406, 408) sont inclinées à un angle d'inclinaison dans la direction longitudinale (126, 402), le procédé comprenant la détermination de la distance de synchronisation relative à l'aide de l'angle d'inclinaison, d'un périmètre de la pluralité de cibles et d'un nombre total de cibles sur la roue cible (116, 118, 400, 800, 904, 906).

15. Procédé selon la revendication 12, comprenant la détermination d'une mesure de torsion et de la mesure de déplacement axial en appliquant un filtre de moyenne mobile aux signaux de capteur.

16. Procédé selon la revendication 12, comprenant la détermination d'une mesure de torsion de l'arbre (102, 902, 1004) à l'aide d'une distance de synchronisation moyenne entre la détection des cibles de capteur.

17. Procédé selon la revendication 12, comprenant la détermination de l'un ou plusieurs ou de la totalité parmi : une déformation axiale, un déplacement axial, un désalignement parallèle, un désalignement angulaire, un faux-rond et une torsion.

18. Procédé selon la revendication 12, comprenant la transmission d'une rétroaction critique de sécurité ou d'un ou plusieurs indicateurs de santé structurelle à une interface de signal.
